(19) **Europäisches Patentamt**

**European Patent Office**

**Office européen des brevets**

(11) **EP 0 939 016 B1**

(12) **FASCICULE DE BREVET EUROPEEN**

(45) Date de publication et mention
de la délivrance du brevet:
**20.08.2003 Bulletin 2003/34**

(51) Int Cl.⁷: **B60T 8/00**, B60T 13/66

(21) Numéro de dépôt: **99400401.8**

(22) Date de dépôt: **19.02.1999**

(54) **Procédé de commande de la consigne de freinage sur les roues d'un véhicule**

Verfahren und Vorrichtung zur Bremskrafteinstellung an den Rädern eines Kraftfahrzeuges

Method and device for adjusting the braking force of the wheels of a vehicle

(84) Etats contractants désignés:
**DE ES GB IT**

(72) Inventeurs:
• **Delrieu, Frédéric**
  **92800 Puteaux (FR)**
• **Fervel, Marc**
  **75014 Paris (FR)**

(30) Priorité: **26.02.1998 FR 9802348**

(43) Date de publication de la demande:
**01.09.1999 Bulletin 1999/35**

(56) Documents cités:
**DE-A- 3 903 833        DE-A- 4 118 461**

(73) Titulaire: **Renault s.a.s.**
**92100 Boulogne Billancourt (FR)**

**Description**

L'invention concerne la commande de la consigne de freinage sur les roues d'un véhicule, et notamment la répartition d'efforts de freinage pour optimiser la stabilité transversale et la distance d'arrêt d'un véhicule à quatre roues en courbe ou en ligne droite.

Les véhicules équipés de système de freinage classique présentent des risques d'instabilité dans certaines situations de freinage en virage. Le problème est résolu en adoptant un compromis sur la répartition de freinage avant/ arrière et sur la définition du châssis. Or ces compromis peuvent provoquer une dégradation du comportement routier (châssis peu mobile, perte en motricité). Certaines conditions de freinage en courbe restent critiques quel que soit le réglage du système de freinage. Ces cas critiques nécessitent une activité conducteur importante et adaptée.

La publication DE4118461 décrit un système de contrôle du freinage roue par roue, mais la méthode présentée ne permet pas d'obtenir une stabilité de comportement et une distance de freinage optimales.

L'invention vise à remédier à ces inconvénients.

Un but de l'invention est de proposer une commande de la consigne de freinage sur les roues d'un véhicule assurant un comportement routier neutre et stable.

L'invention a encore pour but de diminuer l'activité conducteur par rapport à un système de freinage classique et de réduire la distance d'arrêt en ligne droite ainsi qu'en virage.

La présente invention propose donc d'une façon générale un système de freinage qui applique quatre couples de freinage indépendants aux quatre roues du véhicule en fonction de la consigne de décélération du conducteur, de l'état dynamique du véhicule et de diverses lois de commande et de contrôle intégrées dans un calculateur embarqué. Les informations sur l'état du véhicule et l'action du conducteur sont fournies par des capteurs embarqués.

Plus précisément, l'invention propose un procédé de commande de la consigne de freinage sur les roues d'un véhicule. Selon une caractéristique générale de l'invention, on élabore pour les quatre roues du véhicule quatre consignes de freinage indépendantes déterminées par une loi de répartition de freinage prenant en compte la consigne de décélération fournie par le conducteur et l'état dynamique du véhicule, et on applique aux roues du véhicule quatre couples de freinage déterminés à partir des quatre consignes de freinage, d'une loi d'antiblocage de roue et d'une loi de contrôle de stabilité transversale.

Ainsi, l'invention prévoit en combinaison l'utilisation de trois fonctions ou lois complémentaires, à savoir une loi de répartition des efforts de freinage roue par roue, une loi antiblocage classique de roue, et une loi classique de contrôle de stabilité transversale. La combinaison de ces trois lois assure l'exploitation optimale des efforts de freinage en terme de stabilité transversale du véhicule et de distance d'arrêt. La loi de répartition intervient dès que le conducteur appuie sur la pédale de frein ; son action est fréquente. Les lois antiblocage et contrôle de stabilité n'interviennent qu'exceptionnellement. L'application des efforts de freinage est par exemple réalisé par des actionneurs électriques, hydrauliques ou électro-hydrauliques.

Par ailleurs, selon un mode de mise en oeuvre de l'invention, pour la détermination des couples de freinage effectivement appliqués sur les roues, la loi antiblocage est prioritaire tandis que les consignes de freinage élaborées selon ladite loi de répartition sont modulées par la loi de contrôle de stabilité transversale. En d'autres termes, la loi de contrôle de stabilité se superpose à la loi de répartition.

On détermine avantageusement l'état dynamique du véhicule à partir des valeurs instantanées de l'accélération transversale du véhicule, de l'accélération longitudinale du véhicule, de la vitesse de lacet, de l'angle volant et de la vitesse des roues. On estime par ailleurs la charge verticale et la charge transversale sur chaque pneumatique.

La détermination des quatre consignes indépendantes de freinage selon la dite loi de répartition comporte avantageusement une élaboration de quatre consignes de base selon un critère d'équi-adhérence des quatre pneumatiques, ce critère d'équi-adhérence étant établi à partir de la charge verticale et de la charge transversale sur chacun des pneumatiques. Par ailleurs, on module à chaque instant lesdites consignes de base ainsi déterminées en fonction de la valeur de l'accélération transversale et de la décélération longitudinale audit instant, et en fonction de la vitesse du véhicule audit instant.

Ainsi, selon un mode de mise en oeuvre de l'invention, si l'accélération transversale est supérieure à un premier seuil prédéterminé, par exemple 2m/s$^2$, les quatre consignes de freinage déterminées selon ladite loi de répartition sont les quatre consignes de base élaborées selon le critère d'équi-adhérence.

Par contre, si l'accélération transversales est inférieure au premier seuil prédéterminé, c'est-à-dire sous faible accélération transversale et freinage léger, le comportement naturel du véhicule est stable. Dans ces çonditions, le véhicule étant quasiment en ligne droite, une faible dissymétrie de traînée peut générer un faible tirage. La légère dissymétrie droite/gauche des efforts de freinage calculés selon le critère d'équi-adhérence est alors maintenue à zéro pour ne pas influencer la dynamique transversale. En d'autres termes, on applique alors les mêmes consignes de freinage sur les deux roues d'un même train. Ainsi, pour un freinage hydraulique, on applique aux deux roues avant une pression de freinage égale à celle du maître-cylindre et on applique aux deux roues arrières une pression de freinage égale à celle du maître-cylindre limitée par la loi classique de répartition longitudinale (limitation de la pression arrière à une valeur fixe au-delà d'un certain seuil de pression).

Selon un mode de de réalisation de l'invention, si l'accélération transversale est supérieure à un deuxième seuil (par exemple 7m/s$^2$) plus élevé que le premier seuil, et si la décélération longitudinale est inférieure à une limite prédéterminée (par exemple 4m/s$^2$) on applique avantageusement aux roues intérieures des consignes de freinage plus faibles que les consignes de base (consignes de base déterminées selon le critère d'équi-adhérence) et on applique aux roues extérieures des consignes de freinage plus fortes que les consignes de base.

De même, si la vitesse du véhicule est supérieure à une vitesse limite prédéterminée, par exemple 80 km/h, on applique aux roues intérieures des consignes de freinage plus faibles que les consignes de base et on applique aux roues extérieures des consignes de freinage plus fortes que les consignes de base.

On détermine avantageusement les roues intérieures et extérieures en fonction du signe de l'accélération transversale et on peut déterminer la consigne de décélération à partir de la mesure de la course de la pédale de frein.

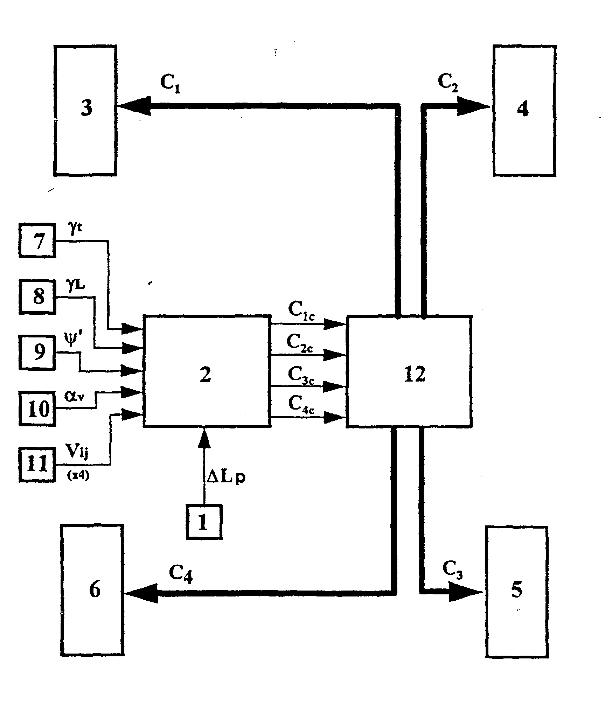

D'autres avantages et caractéristiques de l'invention apparaîtront à l'examen de la description détaillée d'un mode de mise en oeuvre et de réalisation, nullement limitatif, et de la figure unique représentant un synoptique très schématique d'un dispositif permettant la mise en oeuvre du procédé selon l'invention.

Lorsque le conducteur freine, un capteur de course de la pédale de frein 1 délivre une information correspondante au calculateur embarqué 2 qui détermine quatre consignes de couples de freinage $Ci_c$ pour les quatre roues 3, 4, 5 et 6 du véhicule. Ces consignes de couples de freinage sont calculées en fonction des informations sur l'état dynamique du véhicule qui sont fournies par des capteurs d'accélération transversale 7, d'accélération longitudinale 8, de vitesse de lacet 9, d'angle volant 10 et des quatre vitesses-roues 11.

Quatre couples de freinage Ci sont appliqués aux roues par un groupe de quatre actionneurs 12 qui peut être hydraulique, électrique ou électro-hydraulique.

Un pas de temps est défini par une fréquence d'échantillonnage. A chaque instant d'échantillonnage, le calculateur envoie les quatre consignes de couples de freinage aux actionneurs des quatre roues du véhicule. La détermination de ces quatre consignes de freinage sont élaborées selon une loi de répartition qui prévoit un calcul en trois étapes : calcul de la consigne de décélération du véhicule, identification de l'état dynamique du véhicule et calcul des consignes de couples de freinage selon trois critères.

La consigne de décélération $\gamma L_{cons}$ est calculée à partir de la mesure de la course pédale de frein $\Delta L_p$ et d'une relation prédéterminée entre décélération et course pédale en mémoire dans le calculateur 2 :

Par exemple : $\gamma L_{cons} = K.\Delta L_p$

L'identification de l'état dynamique du véhicule est effectuée à partir de la lecture des informations fournies par les capteurs 7, 8, 9, 10, 11. L'effort vertical sur chaque pneumatique $F_{zi}$ ainsi que l'effort transversal $Fy_i$ sont estimés. L'effort vertical est la variable dynamique qui permet de déterminer au premier ordre le potentiel du pneumatique en terme de guidage et de décélération du véhicule. L'effort transversal permet d'évaluer le niveau de sollicitation $F_{yi}/F_{zi}$ du pneu i.

Les quatre efforts verticaux sont estimés à partir de l'accélération transversale $\gamma t$, de l'accélération longitudinale $\gamma L$ et des paramètres statiques du véhicule :

par exemple :

Reports de masse longitudinaux :

$$Fz_{trav} = M1.g + M.\gamma L.h0/L$$

$$Fz_{trar} = M2.g + M.\gamma L.h0/L$$

Reports de masse transversaux :

$$\Delta Fz_{trav} = (M.\gamma t/E1) . [L2.S1/L + C1.h0/(C1+C2-M.g.h0)]$$

$$\Delta Fz_{trar} = (M.\gamma t/E2) . [L1.S2/L + C2.h0/(C1+C2-M.g.h0)]$$

Estimation charge verticale :

$$Fz1 = Fz_{trav} + \Delta Fz_{trav}$$

$$Fz2 = Fz_{trav} - \Delta Fz_{trav}$$

$$Fz3 = Fz_{trar} - \Delta Fz_{trar}$$

$$Fz4 = Fz_{trar} + \Delta Fz_{trar}$$

avec :

| | |
|---|---|
| M, M1, M2 | masse totale, masse train avant, masse train arrière |
| h0 | hauteur centre de gravité |
| L | empattement |
| E1, E2 | voies avant et arrière |
| S1, S2 | hauteurs centres de roulis avant et arrière |
| C1, C2 | raideurs anti-roulis avant et arrière |
| g | gravité |
| L1, L2 | distances en projection horizontale du centre de gravité aux appuis avant et arrière du véhicule (L = L1+L2) |

Les paramètres statiques du véhicule sont classés en deux groupes : les paramètres constants et les paramètres variables. Les paramètre constants, comme l'empattement du véhicule, ont une valeur figée dans la loi de commande. Les paramètres variables, comme la masse du véhicule, ont une valeur initiale rentrée par défaut et recalée au cours d'une identification en roulage. L'identification est effectuée à partir de la corrélation entre les mesures fournies par les différents capteurs sous sollicitation longitudinale et/ou transversale.

Les quatre efforts transversaux $Fy_i$ sont estimés à partir de l'accélération transversale $\gamma t$, de la vitesse de lacet $\psi'$, de l'angle volant av, des charges pneumatiques $Fz_i$ précédemment calculées, des paramètres véhicule et pneumatique :

par exemple : les $Fy_i$ sont calculés à partir de la résolution du système d'équations suivant :

$$Fy_{trav} + Fy_{trar} = M. \gamma t$$

$$Fy_{trav} . L1 - Fy_{trar} . L2 = Iz.\psi'$$

$$Fy1 + Fy2 = Fy_{trav}$$

$$Fy3 + Fy4 = Fy_{trar}$$

$$Fy1/D(Fz1) = Fy2/D(Fz2)$$

$$Fy3/D(Fz3) = Fy4/D(Fz4)$$

avec

$$D(Fz) = K_{pneu}.Fz$$

(rigidité transversale du pneu fonction linéaire de la charge)

Le calcul des consignes de couple de freinage $Ci_e$ s'effectue en trois étapes. Un premier calcul basé sur le principe de l'équi-adhérence des quatre pneumatiques permet de déterminer quatre consignes de freinage, dites consignes de base. Deux calculs modulent ensuite successivement cette répartition en fonction du niveau de sollicitation du véhicule et de la vitesse du véhicule.

Le critère d'équi-adhérence répartit les efforts de freinage Fxi de manière à obtenir le même niveau d'adhérence $\mu = |\vec{F}_x + \vec{F}_y|/|\vec{F}_z|$ sur les quatre pneumatiques. Les consignes de base $Ci_{c\ base}$ qui correspondent à ce critère d'équi-adhérence sont calculées en fonction des trois relations suivantes :

(1)

$$\mu_1 = \mu_2 = \mu_3 = \mu_4$$

avec

$$\mu i = \frac{|\vec{F}_{xi} + \vec{F}_{yi}|}{|\vec{F}_{zi}|}$$

(2)

$$\sum_{i=1}^{4} Fx_i = M.\gamma L_{cons}$$

(3)

$$Ci_{c\ base} = Fx_i * Rroue_i \ (R = rayon)$$

La répartition des efforts de freinage obtenue permet d'exploiter le potentiel maximum de chaque pneumatique sans blocage prématuré de l'une des roues. Le maintien en adhérence des quatre pneumatiques assure une décélération maximale du véhicule.

En virage, les roues intérieures sont déchargées, les roues extérieures chargées. La capacité de freinage de chaque pneumatique est principalement dépendante du report de charge. L'effet charge est largement prépondérant sur l'écart de sollicitation transversale droite / gauche. Les consignes de freinage sur les roues intérieures sont donc plus faibles que sur les roues extérieures. La dissymétrie transversale des traînées Fx crée un moment de lacet dirigé vers l'extérieur du virage. L'effet sous-vireur obtenu compense la tendance survireuse naturelle du véhicule. Le délestage du train arrière et le maintien en adhérence du train avant rend un véhicule standard plus mobile, phénomène qui sans action correctrice provoque une instabilité. La répartition équi-adhérence stabilise le comportement lors d'un freinage en courbe.

Les consigne de freinage de base calculées avec le critère d'équiadhérence sont ajustées en fonction du niveau de sollicitation du véhicule (l'accélération transversale et la décélération longitudinale) et de la vitesse du véhicule.

Sous faible accélération transversale et léger freinage (par exemple $\gamma t < 2m/s^2$), le comportement naturel du véhicule est stable. Dans ces conditions, le véhicule est quasiment en ligne droite, une faible dissymétrie de traînée peut générer une faible titrage. La légère dissymétrie droite/gauche des efforts de freinage calculés avec le critère d'équi-adhérence est maintenue à zéro pour ne pas influencer la dynamique transversale.

Lorsque le freinage s'intensifie, la répartition rejoint progressivement la stratégie d'équi-adhérence. En d'autres termes si $\gamma t > 2m/s^2$, les consignes de freinage rejoignent les consignes de base du critère d'équi-adhérence.

Sous forte accélération transversale et léger freinage (par exemple si $\gamma t > 7m/s^2$ et $\gamma L < 4m/s^2$), les efforts de freinage sont faibles et le couple de lacet dû à la dissymétrie droite/gauche est faible. L'effet correctif de sous-virage n'est pas suffisant pour contrer totalement le survirage naturel du véhicule. La dissymétrie droite/gauche des consignes de freinage est augmentée.

Ainsi, si Cavi, Cave, Cari et Care désignent les consignes sur les roues avant intérieure, avant extérieure, arrière intérieure et arrière extérieure, on prendra :

$$Cavi = Cavi \text{ équi-adhérence} - \varepsilon av$$

$$Cave = Cave \text{ équi-adhérence} + \varepsilon av$$

$$Cari = Cari \text{ équi-adhérence} - \varepsilon ar$$

$$Care = Care \text{ équi-adhérence} + \varepsilon ar$$

avec $\varepsilon av$ et $\varepsilon ar$ désignant les "offset" de pression au train avant et au train arrière.

Les consignes sont finalement ajustées en fonction de la vitesse du véhicule. En sécurité réelle, lorsque la vitesse est élevée, le comportement routier naturel du véhicule est plus dynamique, les réponses sont surtensives et l'équilibre lors d'un freinage en courbe est plus sensible. En sécurité perçue, l'émotion du conducteur à haute vitesse est plus importante et l'impression de sécurité est très dépendante de la parfaite stabilité du train. La loi de répartition augmente la dissymétrie droite/gauche des traînées lorsque la vitesse augmente pour amplifier le couple stabilisant de sous-virage. A l'inverse, la mobilité est favorisée à basse vitesse en minimisant l'effet sous vireur de la stratégie.

Par exemple        Si V > 80km/h alors

$$Cavi = Cavi \text{ équi-adhérence} - \varepsilon vitesse$$

$$Cave = Cave \text{ équi-adhérence} + \varepsilon vitesse$$

$$Cari = Cari \text{ équi-adhérence} - \varepsilon vitesse$$

$$Care = Care \text{ équi-adhérence} + \varepsilon vitesse$$

avec "$\varepsilon vitesse$" désignant l'offset de pression.

En freinage d'urgence, lorsque la consigne de décélération du conducteur monte au maximum, les couples Ci appliqués aux roues peuvent provoquer des amorces de blocage. Une stratégie d'anti-blocage basée sur l'observation des vitesse roues limite le couple de freinage pour maintenir la traînée à sa valeur maximale sans perte de guidage. Une marge de sécurité est introduite pour les deux roues arrières de manière à limiter le couple de freinage bien avant l'amorce de blocage et préserver la stabilité transversale du train arrière.

Lorsque une instabilité transversale est observée hors phase de freinage ou pendant le freinage, le calculateur envoie aux actionneurs des consignes de couple de freinage dissymétriques de manière à créer un moment de lacet stabilisateur. Le contrôle de stabilité est assuré par un asservissement en boucle fermée sur la vitesse de lacet mesurée et la dérive estimée à partir de l'accélération transversale principalement. un modèle classique interne de référence calcule les consignes de lacet et de dérive à partir de l'angle volant, des vitesse roues, de l'accélération transversale et des paramètres véhicule.

Le calculateur 2 gère les trois fonctions Répartition, Anti-blocage et Contôle de stabilité suivant deux règles principales : la fonction Anti-blocage est prioritaire sur les fonctions Répartition et Contrôle de stabilité, la fonction Contrôle de stabilité se superpose à la fonction Répartition.

La fonction Répartition intervient dès que le conducteur appuie sur la pédale de frein. Son action est fréquente. L'intervention des fonctions Anti-blocage et Contrôle de stabilité est exceptionnelle.

Lorsque le conducteur freine en virage, la fonction répartition assure un comportement routier neutre et donc stable. L'activité conducteur est considérablement diminuée par rapport à un système de freinage classique. Il n'y a pas d'amorce de blocage prématurée sur les roues intérieures, le pouvoir directeur du train avant et la capacité de guidage du train arrière sont préservés. Les distances d'arrêt sont réduites, le conducteur a la possibilité d'amener le véhicule à la décélération maximale sans déclencher la régulation d'antiblocage. Il n'y a pas de compromis dû à la contrainte de stabilité lors d'un freinage en courbe. L'usure des pneumatiques est minimisée.

En freinage d'urgence, au cas où le conducteur écrase la pédale de frein, la fonction anti-blocage du système maintient l'adhérence de chaque roue de manière à générer une traînée maximale sans perte de guidage.

Lorsqu'une instabilité transversale est observée (coup de vent latéral, verglas, ...) la fonction de stabilité du système stabilise le véhiculé en générant des efforts de freinage dissymétriques.

Le châssis peut gagner en compromis stabilité/performance. La contrainte de stabilité lors d'un freinage en courbe est levée par le système de freinage selon l'invention, ce qui permet de concevoir un châssis plus performant en terme de mobilité et de motricité.

La fonction Répartition utilise un nombre de capteurs qui peut être réduit. Certaines variables utilisées selon l'invention peuvent être estimées à partir d'autres variables. Les capteurs préconisés sont pertinents par rapport à l'objectif recherché et la stratégie d'élaboration selon l'invention sera d'autant moins performante que le nombre de capteurs sera réduit.

Pour le calcul des reports de charge, l'accélération longitudinale peut être estimée à partir de la consigne de freinage précédante et des quatre vitesses roues. Pour le calcul des efforts transversaux, le braquage volant et la vitesse de lacet peuvent être estimées à partir des vitesse roues et de l'accélération transversale. Le capteur de course de la pédale de frein peut être remplacé par un capteur d'effort pédale ou de pression dans le cas d'un système hydraulique.

Le nombre minimum de capteur nécessaire pour conserver une prestation satisfaisante se décline pour chaque fonction. La prestation de la fonction Répartition nécessite un capteur d'accélération transversale, quatre capteurs de vitesse roue et un capteur de course pédale. L'accélération transversale peut être estimée à partir des quatre vitesses roues mais les erreurs statiques et dynamiques dégradent significativement la prestation Répartition. La prestation de la fonction Anti-blocage de roue nécessite quatre capteurs de vitesse roue. La prestation de la fonction Contrôle de stabilité nécessite un capteur d'angle volant, 4 capteurs de vitesse roue et un capteur de vitesse de lacet.

**Revendications**

1. Procédé de commande de la consigne de freinage sur les roues d'un véhicule, **caractérisé par le fait qu'**on détermine l'état dynamique du véhicule à partir des valeurs instantanées de l'accélération transversale ($\gamma t$) du véhicule, de l'accélération longitudinale ($\gamma L$) du véhicule, de la vitesse de lacet, de l'angle volant et de la vitesse des roues, **par le fait qu'**on estime la charge verticale et la charge transversale sur chaque pneumatique, et **par le fait qu'**on élabore pour les quatre roues du véhicule quatre consignes de freinage indépendantes déterminées par une loi de répartition de freinage prenant en compte la consigne de décélération ($\Delta L_p$) fournie par le conducteur et l'état dynamique du véhicule, et on applique aux roues du véhicule quatre couples de freinage ($Ci_c$) déterminés à partir desdites quatre consignes de freinage, d'une loi d'antiblocage de roue et d'une loi de contrôle de stabilité transversale.

2. Procédé selon la revendication 1, **caractérisé par le fait que** la détermination des quatre consignes indépendantes de freinage selon ladite loi de répartition comporte une élaboration de quatre consignes de base selon un critère d'équi-adhérence des quatre pneumatiques, ce critère d'équi-adhérence étant établi à partir de la charge verticale (Fz) et de la charge transversale (Fy) sur chacun des pneumatiques, et **par le fait qu'**on module à chaque instant lesdites consignes de base ainsi déterminées en fonction de la valeur de l'accélération transversale et de la décélération longitudinale audit instant, et en fonction de la vitesse du véhicule audit instant.

3. Procédé selon la revendication 2, **caractérisé par le fait que** si l'accélération transversale ($\gamma t$) est supérieure à un premier seuil prédéterminé, les quatre consignes de freinage déterminées selon ladite loi de répartition sont les quatre consignes de base élaborées selon le critère d'équi-adhérence.

4. Procédé selon la revendication 3, **caractérisé par le fait que** si l'accélération transversale ($\gamma t$) est inférieure au premier seuil prédéterminé, on applique les mêmes consignes de freinage sur les deux roues d'un même train.

5. Procédé selon l'une des revendications 3 à 4, **caractérisé par le fait que** si l'accélération transversale ($\gamma t$) est supérieure à un deuxième seuil plus élevé que le premier seuil et si la décélération longitudinale ($\gamma L$) est inférieure à une limite prédéterminée, on applique aux roues intérieures des consignes de freinage plus faibles que les consignes de base et on applique aux roues extérieures des consignes de freinage plus fortes que les consignes de base.

6. Procédé selon l'une des revendications 3 à 5, **caractérisé par le fait que** si la vitesse du véhicule est supérieure à une vitesse-limite prédéterminée, on applique aux roues intérieures des consignes de freinage plus faibles que les consignes de base et on applique aux roues extérieures des consignes de freinage plus fortes que les consignes de base.

**7.** Procédé selon l'une des revendications précédentes, **caractérisé par le fait qu'**on détermine les roues intérieures et extérieures en fonction du signe de l'accélération transversale (γt).

**8.** Procédé selon l'une des revendications précédentes, **caractérisé par le fait qu'**on détermine la consigne de décélération à partir de la mesure de la course de la pédale de frein ($\Delta L_p$).

**9.** Procédé selon l'une des revendications précédentes, **caractérisé par le fait que**, pour la détermination des couples de freinage effectivement appliqués sur les roues, la loi antiblocage est prioritaire, et **par le fait que** les consignes de freinage élaborées selon ladite loi de répartition sont modulées par la loi de contrôle de stabilité transversale.

**Patentansprüche**

**1.** Verfahren zur Steuerung des Bremswertes für die Räder eines Kraftfahrzeuges, **dadurch gekennzeichnet, dass** der dynamische Zustand des Fahrzeuges bestimmt wird ausgehend von den Momentanwerten der Beschleunigung (γt) in Querrichtung des Fahrzeuges, der Beschleunigung γL in Längsrichtung des Fahrzeuges, der Giergeschwindigkeit, des Lenkradwinkels und der Drehgeschwindigkeit der Räder, dass die auf jeden Reifen einwirkende senkrechte Belastung und die Belastung in Querrichtung geschätzt werden, dass für die vier Räder des Fahrzeuges vier voneinander unabhängige Bremswerte erstellt werden, die durch eine Vorschrift für die Verteilung der Bremskraft unter Berücksichtigung des Wertes der durch den Fahrer bewirkten Verzögerung ($\Delta L_p$) und den dynamischen Zustand des Fahrzeuges bestimmt werden und dass die Räder des Fahrzeuges mit vier Bremsmomenten ($Ci_c$) beaufschlagt werden, die durch die vier Bremswerte, eine Antiblockiervorschrift für die Räder und eine Vorschrift für die Kontrolle der Seitenstabilität bestimmt werden.

**2.** Verfahren nach Anspruch 1, **dadurch gekennzeichnet, dass** die Bestimmung der vier voneinander unabhängigen Bremswerte gemäss der Vorschrift für die Verteilung eine Erstellung von vier Grundwerten gemäss einem Kriterium des Äqui-Haftvermögens für die vier Reifen beinhaltet, wobei dieses Kriterium des Äqui-Haftvermögens gebildet wird ausgehend von der auf jeden Reifen einwirkenden senkrechten Belastung (Fz) und der Belastung (Fy) in Querrichtung und dass zu jedem Zeitpunkt die dadurch gebildeten Grundwerte moduliert werden als Funktion eines Wertes für die Beschleunigung in Querrichtung und für die Verzögerung in Längsrichtung zu diesem Zeitpunkt sowie als Funktion der Geschwindigkeit des Fahrzeuges zu diesem Zeitpunkt.

**3.** Verfahren nach Anspruch 2, **dadurch gekennzeichnet, dass**, wenn die Beschleunigung (γt) in Querrichtung größer als ein erster vorgegebener Schwellwert ist, die vier gemäss der Vorschrift für die Verteilung bestimmten Bremswerte die vier Grundwerte sind, die gemäss dem Kriterium der des Äqui-Haftvermögens erstellt worden sind.

**4.** Verfahren nach Anspruch 3, **dadurch gekennzeichnet, dass**, wenn die Beschleunigung (γt) in Querrichtung kleiner als der erste vorgegebene Schwellwert ist, die beiden Räder einer Achse mit den gleichen Bremswerten beaufschlagt werden.

**5.** Verfahren nach einem der Ansprüche 3 bis 4, **dadurch gekennzeichnet, dass**, wenn die Beschleunigung (γt) in Querrichtung größer als ein zweiter Schwellwert ist, der oberhalb des ersten Schwellwertes liegt und wenn die Verzögerung (γL) in Längsrichtung kleiner als ein vorgegebener Grenzwert ist, die kurveninneren Räder mit geringeren Bremswerten als die Grundwerte beaufschlagt werden und die kurvenäußeren Räder mit größeren Bremswerten als die Grundwerte beaufschlagt werden.

**6.** Verfahren nach einem der Ansprüche 3 bis 5, **dadurch gekennzeichnet, dass**, wenn die Geschwindigkeit des Fahrzeuges größer als eine vorgegebene Grenzgeschwindigkeit ist, die kurveninneren Räder mit geringeren Bremswerten als die Grundwerte beaufschlagt werden und die kurvenäußeren Räder mit größeren Bremswerten als die Grundwerte beaufschlagt werden.

**7.** Verfahren nach einem der vorhergehenden Ansprüche, **dadurch gekennzeichnet, dass** die Bestimmung der kurveninneren und der kurvenäußeren Räder als Funktion des Vorzeichens der Beschleunigung (γt) in Querrichtung erfolgt.

**8.** Verfahren nach einem der vorhergehenden Ansprüche, **dadurch gekennzeichnet, dass** der Wert der Verzögerung durch die Messung des Weges $\Delta L_p$ des Bremspedals ermittelt wird.

9.  Verfahren nach einem der vorhergehenden Ansprüche, **dadurch gekennzeichnet, dass** bei der Bestimmung der Bremsmomente, mit denen die Räder tatsächlich beaufschlagt werden, die Antiblockiervorschrift Vorrang hat und dass die nach der Vorschrift für die Verteilung ermittelten Bremswerte mit der Vorschrift für die Kontrolle der Stabilität moduliert werden.

**Claims**

1.  A method for the control of the braking instruction for the wheels of a vehicle, **characterised in that** the dynamic state of the vehicle is determined from the instantaneous values of transverse acceleration ($\gamma t$) of the vehicle, longitudinal acceleration ($\gamma L$) of the vehicle, rate of yaw, steering wheel angle and wheel speed, **in that** the vertical load and the transverse load on each tyre is estimated, and **in that** four independent braking instructions determined by a braking distribution law taking account of the deceleration instruction ($\Delta L_p$) supplied by the driver and the dynamic state of the vehicle are processed for the four vehicle wheels, and four braking torques ($Ci_c$) calculated from the four braking instructions, a wheel anti-locking law and a transverse stability control law are applied to the vehicle wheels.

2.  A method as claimed in claim 1, **characterised in that** the calculation of the four independent braking instructions according to the law of distribution comprises the processing of four basic instructions according to a criterion of equal adherence of the four tyres, this criterion of equal adherence being established from the vertical load ($Fz$) and the transverse load ($Fy$) on each of the tyres, and **in that**, at each instant, the basic instructions determined in this way are modulated as a function of the transverse acceleration value and the longitudinal deceleration at that instant and as a function of the vehicle speed at that instant.

3.  A method as claimed in claim 2, **characterised in that** if the transverse acceleration ($\gamma t$) is greater than a first predetermined threshold, the four braking instructions calculated according to the distribution law are the four basic instructions processed according to the criterion of equal adherence.

4.  A method as claimed in claim 3, **characterised in that** if the transverse acceleration ($\gamma t$) is lower than the first predetermined threshold, the same braking instructions are applied to the two wheels of the same train.

5.  A method as claimed in one of claims 3 to 4, **characterised in that** if the transverse acceleration ($\gamma t$) is greater than a second threshold higher than the first threshold and if the longitudinal deceleration ($\gamma L$) is lower than a predetermined limit, braking instructions lower than the basic instructions are applied to the inner wheels and braking instructions higher than the basic instructions are applied to the outer wheels.

6.  A method as claimed in one of claims 3 to 5, **characterised in that** if the speed of the vehicle is greater than a predetermined limit speed, braking instructions lower than the basic instructions are applied to the inner wheels and braking instructions higher than the basic instructions are applied to the outer wheels.

7.  A method as claimed in one of the preceding claims, **characterised in that** the inner and outer wheels are determined as a function of the sign of the transverse acceleration ($\gamma t$).

8.  A method as claimed in one of the preceding claims, **characterised in that** the deceleration instruction is determined from the measurement of the brake pedal stroke ($\Delta L_p$).

9.  A method as claimed in one of the preceding claims, **characterised in that**, for the calculation of the braking torques actually applied to the wheels, the anti-locking law takes priority, and **in that** the braking instructions processed according to the distribution law are modulated by the transverse stability control law.